# EUROPEAN PATENT APPLICATION

(11) **EP 3 587 166 A1**
(43) Date of publication of application: **01.01.2020**
(21) Application number: 18179832.3
(22) Date of filing: 26.06.2018
(51) Int. Cl.: B60L 11/18, B60P 3/06

(54) **COMBINATION OF A VEHICLE TRANSPORT TRUCK AND AT LEAST ONE VEHICLE, VEHICLE TRANSPORT TRUCK, AND VEHICLE**

(71) Applicant: Presham B.V., 7951 SK Staphorst (NL); Hooikammer, Jan Berend, 7951 EE Staphorst (NL)
(72) Inventor: Hooikammer, Jan Berend, 7951 EE Staphorst (NL)
(74) Representative: 't Jong, Bastiaan Jacob

(57) **Abstract**

The invention relates to a combination, comprising:
- a vehicle transport truck, provided with a motor for propelling the transport truck, and carrying means; and
- at least one vehicle, provided with a motor for propelling the vehicle, and an energy supply for powering the motor of the vehicle
wherein the at least one vehicle is carried by the carrying means of the vehicle transport truck
wherein the transport truck comprises first connecting means, in a supply connection with the motor of the transport truck;
wherein the vehicle comprises comprises second connecting means, in a supply connection with the energy supply of the vehicle; and
wherein the first connecting means are in a supply connection with the second connecting means for supplying the motor of the vehicle transport truck with energy from the energy supply of the vehicle.

The invention further relates to a vehicle transport truck and to a vehicle.

## Description

The invention relates to a combination, comprising:
- a vehicle transport truck, provided with a motor for propelling the transport truck, and carrying means; and
- at least one vehicle, provided with a motor for propelling the vehicle, and an energy supply for powering the motor of the vehicle
wherein the at least one vehicle is carried by the carrying means of the vehicle transport truck.

Vehicle transport trucks are known in order to transport vehicles between locations, e.g. after use of the vehicle by a user. Such vehicle transport trucks may comprise a towing vehicle and a trailer connected to the towing vehicle, providing a possibility to transport a plurality of vehicles at once, e.g. on one or a plurality of whether or not stacked loading platforms. The towing vehicle comprises a motor as well an energy storing means, such as a fuel tank with fuel which supplies energy to the motor. The trailer may be integrated with the towing vehicle into a combination transport truck as well.

Electric vehicles, i.e. vehicles which are propelled by an electrically powered motor, such as electric passenger cars, are gaining in popularity in comparison to vehicles which are propelled by a motor powered by an oil-based fuel for a variety of reasons, such as concern for global warming. Electric vehicles may be transported using vehicle transport trucks as well.

While vehicle transport trucks are traditionally powered by a motor powered by an oil-based fuel, a shift towards electrical propulsion is visible in this area as well. However, to be able to transport a trailer loaded with electric vehicles, the means powering the motor of the electric vehicle transport truck are required to have a rather large capacity.

It is an object of the invention to alleviate or even obviate the above-mentioned drawbacks.

This object is achieved using a combination according to the preamble, wherein the transport truck comprises first connecting means, in a supply connection with the motor of the transport truck
wherein the vehicle comprises comprises second connecting means, in a supply connection with the energy supply of the vehicle; and
wherein the first connecting means are in a supply connection with the second connecting means for supplying the motor of the vehicle transport truck with energy from the energy supply of the vehicle.

In the invention, the energy supply of the one or more vehicles loaded on the transport truck is connected to the transport truck via first connecting means and second connecting means in a manner by which the energy present in the energy supply of the vehicles is supplied to the transport truck to power the motor of the transport truck. As a consequence, the size of the energy storing means of the vehicle transport truck, if any, can be reduced, but these may be even omitted as well.

The connection between the first and second connecting means can be wired, e.g. via a cable, or wireless, e.g. via induction.

The vehicle and the transport truck may rely on a variety of types of energy sources (e.g. fuel, electrical energy, hydrogen fuel). The vehicle and the transport truck may rely on the same kind of energy sources for powering the motor (e.g. electricity), but may also (at least partly) use different types of energy sources. In the latter case, the energy stored in the energy supply of the vehicle may be converted by converting means before being transferred to the transport truck, e.g. by the vehicle. For instance, the vehicle may be (partly) powered by hydrogen fuel, which is first converted into electric energy before being transferred to the transport truck.

In a first embodiment of the combination according to the invention, the vehicle transport truck is an electric vehicle transport truck of which the motor comprises an electric motor, in which at least one vehicle is a vehicle of which the motor comprises an electric motor and of which the energy supply comprises a battery.

A combination of an electric vehicle transport truck with at least one electric vehicle enhances the ease of transfer of energy between the vehicle transport truck and the vehicle, since the need for conversion is at least reduced.

It is stressed that transport trucks and vehicles such as cars typically comprise a battery for powering on-board electronics such as lights, safety systems, air conditioning, and so on. If the invention is used in transport trucks and vehicles with electrical propulsion, the power source (e.g. energy supply or energy storing means) that provides the energy for electrical propulsion may be the same or a different power source as for the on-board electronics.

In a second embodiment of the combination according to the invention, the combination further comprises directing means, such as a diode, for directing energy delivery in a direction from the battery of the at least one vehicle to the motor of the transport truck.

With a battery installed in the transport truck, it is necessary that the energy is directed from the vehicles towards the transport truck, more particularly, the battery of the transport truck. Since the charge carried by the battery of the transport truck may be lower than than the charge of the vehicle, it may be advantageous to include directing means (possibly in the vehicle, but additionally and preferably alternatively on the transport truck, since one directing means will direct the energy delivery for a plurality of, and preferably all vehicles) for directing energy in the preferred direction. A diode is an example of such a directing means.

In a third embodiment of the combination according to the invention, the vehicle transport truck comprises energy storing means, in a supply connection with the motor of the transport truck for powering the motor of the transport truck and wherein the energy supply is in a supply connection with the motor of the transport truck via the energy storing means.

While the electric vehicle transport truck may solely require on the energy from the vehicles carried by the transport truck, it may be beneficial to include a battery in the transport truck as well, to provide for a possibility to propel the transport truck in a situation when no vehicles are carried. An energy storing means such as a battery or buffer may be used for this.

In a fourth embodiment of the combination according to the invention, the combination further comprises controlling means, for controlling energy delivery from the energy supply of the at least one vehicle to the energy storing means or the motor of the transport truck.

It is preferred to include controlling means for controlling the energy delivery. Such controlling means may have a variety of tasks such as, but not limited to ensuring constant power delivery to the motor of the transport truck, or stop interruption of withdrawal of energy from the energy supply (e.g. battery) of a vehicle when the charge becomes too low, thereby protecting this battery.

In a fifth embodiment of the combination according to the invention, the controlling means comprise a host controller, arranged in the transport truck, and a slave controller in each of the at least one vehicle, in a supply connection with the host controller.

For optimum control by the controlling means, it is preferred to have controlling means which are both located in the transport truck (a host controller) and a slave controller in one, more or all of the electric vehicles carried by the transport truck. The host and slave controller(s) may be connected by a wired or wireless connection, e.g. for transmitting status updates.

In a sixth embodiment of the combination according to the invention, the combination further comprises a switch, arranged in the connection between the first and second connecting means.

In order to safely disconnect the carried vehicle from the trailer, it is preferred to include a switch between the first and second connecting means. This switch may e.g. be embodied as a circuit breaker but also as a combination of a plug connectable to a socket.

In a seventh embodiment of the combination according to the invention, the transport truck comprises a chassis and wherein the carrying means comprise at least one loading platform arranged on the chassis of the transport truck, and wherein the at least one vehicle comprises a chassis with wheels, wherein the at least one vehicle is mounted with the wheels on the loading platform.

For a transport truck to be able to carry a plurality of vehicles in an efficient manner, it is preferred for the transport truck to comprise a chassis with a loading platform on which the carried vehicles are mounted with the wheels, i.e. with the carried vehicles fully supported on the loading platform.

The invention further relates to a vehicle transport truck, provided with a motor for propelling the transport truck, and carrying means for carrying at least one vehicle and first connecting means, in a supply connection with the motor of the transport truck, for connecting to second connecting means of a vehicle, for supplying the motor of the vehicle transport truck with energy from the energy supply of the vehicle.

The presence of first connecting means does not require the presence of further connecting means, but is merely defined as such to distinguish the first connecting means from the second connecting means of a (preferably electric) vehicle to which the transport truck can be connected.

The invention further relates to a vehicle, provided with a motor for propelling the vehicle, and an energy supply for powering the motor and second connecting means, in a supply connection with the battery of the vehicle, for connecting to first connecting means of a transport truck, for supplying the motor of the vehicle transport truck with energy from the energy supply of the vehicle.

The presence of second connecting means does not require the presence of first connecting means on the vehicle, but is merely defined as such to distinguish the second connecting means from the first connecting means of a (preferably electric) vehicle transport truck to which the vehicle can be connected.

These and other details of the invention are further elucidated in the following drawing.

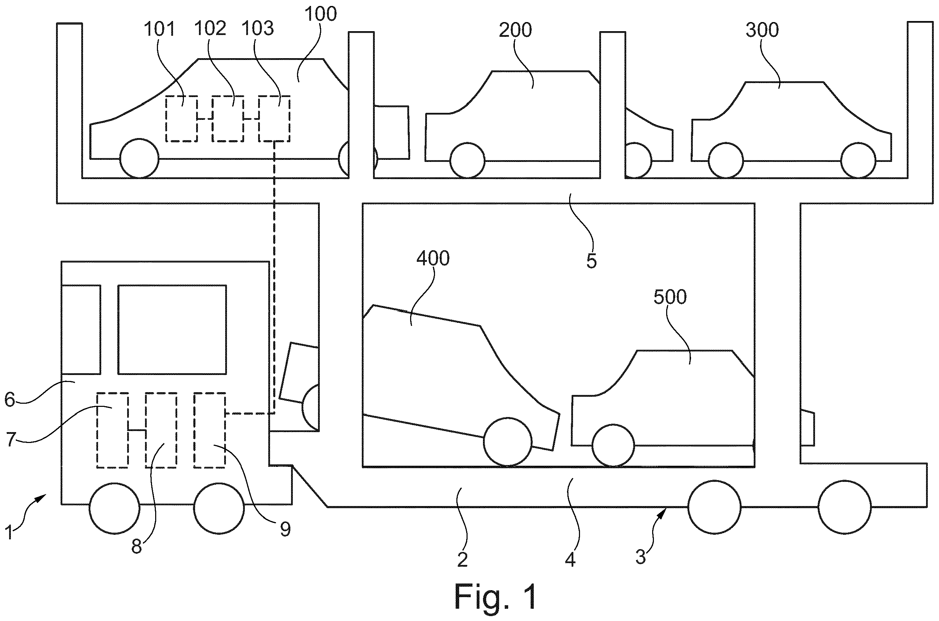

Figure 1 shows a combination according to the invention.

An electric vehicle transport truck 1 is shown in figure 1, comprising a trailer 2 comprising a chassis 3 with two stacked loading platforms 4, 5 and a towing vehicle 6 comprising an electric motor 7 for propelling the towing vehicle 6 in unison with trailer 2, which motor 7 is powered by battery 8. Electric vehicles 100, 200, 300, 400 are mounted with the wheels on the loading platforms 4, 5, as well as a fuel-powered traditional vehicle 500. Electric vehicles 100, 200, 300, 400 may be different or at least partly the same, but will all have, as described in relation to electric vehicle 100, an electric motor 101, electrically connected to a battery 102 for powering the electric motor 101 and connected to a slave controller 103, which is in a supply connection with host controller 9 of transport truck 1, for transferring energy from battery 102 to motor 7, either through battery 8 or directly from host controller 9 to motor 7. Host controller 9 and slave controller 103 are in communication with each other, for example to transfer information on the charge level of the batteries 8, 102, to ensure energy transfer from battery 102 towards the motor 7 when required to propel the transport truck 1. Host controller 9 and/or slave controller 103 may comprise means to direct energy solely from the vehicle 100 to the transport truck 1 (e.g. a diode).

## Claims

1. Combination, comprising:
- a vehicle transport truck, provided with a motor for propelling the transport truck, and carrying means; and
- at least one vehicle, provided with a motor for propelling the vehicle, and an energy supply for powering the motor of the vehicle
wherein the at least one vehicle is carried by the carrying means of the vehicle transport truck
**characterized in that**
- the transport truck comprises first connecting means, in a supply connection with the motor of the transport truck;
- the vehicle comprises comprises second connecting means, in a supply connection with the energy supply of the vehicle; and
- the first connecting means are in a supply connection with the second connecting means for supplying the motor of the vehicle transport truck with energy from the energy supply of the vehicle.

2. Combination according to claim 1, wherein the vehicle transport truck is an electric vehicle transport truck of which the motor comprises an electric motor, and in which at least one vehicle is a vehicle of which the motor comprises an electric motor and of which the energy supply comprises a battery.

3. Combination according to claim 2, further comprising directing means, such as a diode, for directing energy delivery in a direction from the battery of the at least one electric vehicle to the motor of the transport truck.

4. Combination according to claim 1, 2 or 3, wherein the vehicle transport truck comprises energy storing means, in a supply connection with the motor of the transport truck for powering the motor of the transport truck and wherein the energy supply is in a supply connection with the motor of the transport truck via the energy storing means.

5. Combination according to any of the preceding claims, further comprising controlling means, for controlling energy delivery from the energy supply of the at least one vehicle to the energy storing means or the motor of the transport truck.

6. Combination according to claim 5, wherein the controlling means comprise a host controller, arranged in the transport truck, and a slave controller in each of the at least one vehicle, in a supply connection with the host controller.

7. Combination according to any of the preceding claims, further comprising a switch, arranged in the connection between the first and second connecting means.

8. Combination according to any of the preceding claims, wherein the transport truck comprises a chassis and wherein the carrying means comprise at least one loading platform arranged on the chassis of the transport truck, and wherein the at least one vehicle comprises a chassis with wheels, wherein the at least one vehicle is mounted with the wheels on the loading platform.

9. Vehicle transport truck, provided with a motor for propelling the transport truck, and carrying means for carrying at least one vehicle
**characterized by**
first connecting means, in a supply connection with the motor of the transport truck, for connecting to second connecting means of a vehicle, for supplying the motor of the vehicle transport truck with energy from the energy supply of the vehicle.

10. Vehicle, provided with a motor for propelling the vehicle, and an energy supply for powering the motor
**characterized by**
second connecting means, in a supply connection with the battery of the vehicle, for connecting to first connecting means of a transport truck, for supplying the motor of the vehicle transport truck with energy from the energy supply of the vehicle.
